(19) Europäisches Patentamt
European Patent Office
Office européen des brevets

(11) Publication number: **0 159 853 B1**

(12) **EUROPEAN PATENT SPECIFICATION**

(45) Date of publication of patent specification: **26.07.89**

(51) Int. Cl.[4]: **H 04 N 9/73**

(21) Application number: **85302497.4**

(22) Date of filing: **09.04.85**

(54) **Color imaging apparatus.**

(30) Priority: **09.04.84 JP 70434/84**

(43) Date of publication of application:
**30.10.85 Bulletin 85/44**

(45) Publication of the grant of the patent:
**26.07.89 Bulletin 89/30**

(84) Designated Contracting States:
**DE FR GB NL**

(56) References cited:
**EP-A-0 053 318**

**IEEE TRANSACTIONS ON CONSUMER ELECTRONICS, vol. CE-29, no. 3, August 1983, pages 376-382, IEEE, New York, US; KENTARO HANMA et al.: "Novel technologies for automatic focusing and white balancing of solid state color video camera"**

**PATENT ABSTRACTS OF JAPAN, vol. 6, no. 77 (E-106)955r, 14th May 1982 & JP-A-57 13 878**
**PATENT ABSTRACTS OF JAPAN, vol. 5, no. 198 (E-87)870r, 16th December 1981 & JP-A-56 122 283**

**PATENT ABSTRACTS OF JAPAN, vol. 5, no. 117 (E-67)789r, 28th July 1981 & JP-A-56 56 085**

(73) Proprietor: **NEC CORPORATION**
**33-1, Shiba 5-chome, Minato-ku**
**Tokyo 108 (JP)**

(72) Inventor: **Tanaka, Takanori**
**c/o NEC Corporation 31-1 Shiba 5-chome**
**Minato-ku Tokyo (JP)**
Inventor: **Kitagawa, Takashi**
**c/o NEC Corporation 31-1 Shiba 5-chome**
**Minato-ku Tokyo (JP)**

(74) Representative: **Jackson, David Spence et al**
**REDDIE & GROSE 16, Theobalds Road**
**London, WC1X 8PL (GB)**

(56) References cited:
**PATENT ABSTRACTS OF JAPAN, vol. 6, no. 222 (E-140)1100r, 6th November 1982 & JP-A-57 127 376**

**PATENT ABSTRACTS OF JAPAN, vol. 6, no. 238 (E-144)1116r, 26th November 1982 & JP-A-57 138 280**

**EP 0 159 853 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a color imaging apparatus comprising: means for generating a luminance signal and a plurality of color difference signals and for performing white-balance compensation by controlling levels of said color difference signals; means for providing a plurality of carrier chrominance signals by modulating a plurality of color sub-carriers having different phases from one another with said color difference signals; and means for producing a composite color video signal from said luminance signal and said carrier chrominance signals.

A color imaging apparatus of the type defined initially is described in European patent application publication no. 0 053 318.

A conventional simplified single-chip color imaging apparatus generates a signal representing luminance information and a plurality of signals representing color information from an output signal of a single-chip imaging device. The signals representing color information are obtained as the difference between or the sum of two color signals and are used for providing two color difference signals needed in forming a composite color video signal.

In a conventional single-chip CCD camera as disclosed, for example, in an article entitled "Single Chip CCD Color Camera using Field Integration Mode" by Y. Sone et al. published in the "Technical Report of the Institute of Television Engineers of Japan" TEB87-3 ED 691, pp 23 - 28 (March 18, 1983), two color difference signals 2R-G and 2B-G are obtained line-sequentially from n-th and (n+1)-th lines, respectively and are delayed by one-horizontal scanning period (1H). The ratio of the signal components R, G and B included in the color difference signals is determined by characteristics of color filters. If the light separation characteristics of the color filters are such that the best color reproduction characteristic is obtained by using illuminating light having a color temperature of 3200K, the ratio of the color signal components R, G and B included in the color difference signals obtained by using illuminating light of a different color-temperature varies with the color temperature in such a way that the ratio of the signal component R is large at a lower color-temperature and the ratio of the signal component B is large at a higher color-temperature. Since the ratio of the signal components R, G and B determines the final imaging characteristics of the color difference signals, variation of the color temperature causes deterioration of reproduction characteristic.

To prevent the deterioration of the color reproduction characteristic, it is necessary to include color-temperature converting filters in an optical system for the conventional imaging apparatus. To convert color temperature in a wide range, from lower than 3000K (for incandescent lamp) to higher than 10000K (for outdoors), into the specific color-temperature for the standard illuminating light (for example, 3200K) with a small error, a large number of color-temperature converting filters having optical characteristics different from one another must be provided. In use the large number of filters is inconvenient.

It is, therefore, an object of this invention to provide a color imaging apparatus capable of compensating a color reproduction characteristic for variation in the color temperature of the illuminating light.

According to the invention, color imaging apparatus of the type defined initially is characterised by means for providing a color temperature signal representing a color temperature of illuminating light; and means responsive to said color temperature signal for compensating a color reproduction characteristic of said composite video signal after said white-balance compensation.

The invention will now be described by way of example with reference to the accompanying drawings, wherein:

Fig. 1 is a schematic view illustrating a color arrangement in a color filter for use in a color imaging apparatus embodying the invention;

Fig. 2 is a schematic block diagram of a first embodiment of this invention;

Fig. 3 is a schematic block diagram of a second embodiment of this invention; and

Fig. 4 is a schematic block diagram of a third embodiment of this invention.

In a standard three-chip imaging apparatus in which incident light is separated by an optical separation system into three primary colors R, G and B which are applied to three imaging devices, white balance is maintained by gain-controlling (equalizing) the three primary-color signals derived from the three imaging devices. Two color-difference signals for a composite color video signal are obtained from the three equalized primary-color signals. Thus to maintain a satisfactory color reproduction characteristic, the ratio of the signal components R, G and B included in the two color difference signals is not varied without regard to the variation of the color temperature.

The levels of the positive and negative polarity signal components included in the color difference signals vary, that is, the ratios of the color signals R, G and B included in the color difference signals vary in response to variation of the color temperature of the light. If the levels of the positive and negative polarity signal components are not equal to each other for achromic color lighting, the color difference signals do not become zero and the white balance cannot be maintained. The white balance is maintained by adjusting the levels of the positive and negative polarity signal components so that the color difference signals become zero for achromic lighting. However, the ratios of the color signals R, G and B included in the white-balanced color difference signals still vary with variation of the color temperature.

The white-balanced color difference signals quadrature-modulate color sub-carriers having different phases from each other to produce carrier chrominance signals. In the NTSC color television system, the signal B - Y modulates a color sub-carrier having a phase of 0°, and the signal R - Y modulates a color sub-carrier having a phase of 90°. At any phase angle Θ, the color difference signals include color signal components R, G and B defined by the projections of the R - Y signal and B - Y signal. For example, when Θ = 33°, a Q signal is represented by $E_Q = 0.21E_R - 0.52E_G + 0.31E_B$, and when Θ = 123°, an I signal is represented by $E_I = 0.60E_R - 0.28E_G + 0.32E_B$. This means that if the color difference signals are derived directly from the imaging device, a phase at which the ratios of the signal components R, G and B obtained by projection of the R - Y signal and the B - Y signal become equal to those included in the two color difference signals is a phase between the color difference signals. However, since the ratios of the signal components R, G and B in the two color difference signals vary with variation of the color temperature, the ratios obtained by projection also vary. This indicates that if the phases of the color sub-carriers to be quadrature-modulated by the color difference signals are maintained constant, the color reproduction characteristic deteriorates with the variation of the light.

According to this invention, in order to compensate for the deterioration of the color reproduction characteristic, the phase variation of the two color difference signals is adjusted by phase-controlling the color sub-carriers in response to the color temperature of the light. The levels of the color difference signals are also controlled in response to the color temperature.

In Fig. 1 there is shown part of a color filter which is provided on an imaging device 1 (Fig. 2). The imaging device 1 generates an output signal by adding two picture-element signals derived from two picture elements positioned one above the other. In the example of Fig. 1, output signals $(Y_e + M_g)$, $(C_Y + G)$, $(Y_e + M_g)$,... are produced for an n-th line, and output signals $(Y_e + G)$, $(C_Y + M_g)$, $(Y_e + G)$,... are produced for an (n+1)-th line. The output signals in each line contain modulated components having a repetition frequency of two horizontal picture-elements. Since the modulated components are $(Y_e + M_g)$ $(C_Y + G) = 2R - G$ and $(Y_e + G) - (C_Y + M_g) = 2B - G$ in the n-th and (n+1)-th lines, respectively, two color difference signals are obtained every one horizontal scanning line.

In a first embodiment of this invention shown to Fig. 2, the output signal from the imaging device 1 is supplied to a band-pass-filter 2 to obtain the modulated components included therein. The modulated components obtained are detected by a detector 3 which demodulates these components to produce the color difference signals.

The output signal of the imaging device 1 is also supplied to a low pass filter 4 to obtain a low-frequency component, which is then supplied to a white balance circuit 5. The white balance circuit 5 performs the white balancing by performing an adding and/or a subtraction with the demodulated color difference signals and the output signal of the low-pass filter 4 so that the color difference signals become zero when an object of achromatic color is picked up. The two color difference signals, which are line-sequentially derived from the white balance circuit 5, are supplied to a timing circuit 6, in which the two line-sequential color-difference signals are delayed by means of a 1H delay line so as to produce simultaneously two color-difference signals at the outputs of the timing circuit 6. The two (first and second) simultaneous color-difference signals are respectively supplied to first and second gain-control circuits 7 and 8, in which the gains of the color difference signals are controlled independently to each other.

A color-temperature detector 14 detects the color temperature of the light illuminating the object which is picked up by the imaging device 1. The color-temperature detector 14 may comprise means for separating the illuminating light into the three primary- colors, and means for providing a color temperature signal representing the color temperature from the magnitudes of the three primary colors. The color temperature signal is supplied to a control signal calculator 19 for generating first, second, third and fourth control signals, whose values are continuously varied in response to variation of the color temperature. The first and second control signals are supplied to the first and second gain-control circuits 7 and 8 to gain-control the first and second color-difference signals in response to the color temperature of the light, respectively. The gain-controlled first and second color-difference signals are supplied to a modulator 13.

A first-phase color sub-carrier for the first color difference signal is supplied from a terminal 9 to a phase shifter 10 to produce a second-phase color sub-carrier. The first and second-phase color sub-carriers are supplied to first and second phase-control circuits 11 and 12, which are also supplied with the first and fourth control signals, respectively, from the calculator 19. In the first and second phase-control circuits 11 and 12, the phases of the first and second-phase color sub-carriers are controlled in response to the color temperature of the illuminating light so as to compensate for the deterioration of the color reproduction characteristic which occurs with variation of the color temperature of the light.

The phase-controlled first and second-phase color sub-carriers are supplied to a modulator 13, and modulated by the gain-controlled first and second color-difference signals supplied from the first and second gain-control circuits 7 and 8 to provide two carrier chrominance signals, respectively. The carrier chrominance signals are supplied to an adder 17 which is also supplied with a luminance signal which is derived from the output signal of the imaging device 1 by passing the output signal through a low-pass filter 15 and a processing circuit 16. Thus at an output terminal 18 a composite color video signal is provided whose color reproduction characteristic has been compensated.

Fig. 3 shows a second embodiment of this invention which is identical to the first embodiment (Fig. 2) except that the color-temperature detector 14 is omitted and a white-balance compensating signal in the white balance circuit 5 is used as a signal representing the color temperature of the light. This is based on the fact that the white-balance compensating signal for use in the white balance circuit 5 varies with the color temperature of the light.

Fig. 4 shows a third embodiment of this invention which is identical to the first embodiment (Fig. 2) except that there is provided, instead of the control signal calculator 19, a control signal setting circuit 20 for providing the first to fourth control signals whose levels are digitally varied in response to variation of the color temperature. The control signal setting circuit 20 may be composed of an analog-to-digital (A/D) converter for converting the color temperature signal into a digital color temperature signal, a read-only memory (ROM) to which the digital color temperature signal is applied as an address and from which first to fourth digital control signals are outputted in response, and a digital-to-analog (D/A) converter for converting the first to fourth digital control signals into the first to fourth control signals, which are then supplied to the first and second gain-control circuits 7 and 8 and the first and second phase-control circuits 11 and 12. Even when the control signal values for gain and phase-controlling are complicated functions of the color temperature, they can be calculated and written into the ROM. Further, since the control signals are obtained one every frame period, it is possible to use A/D and D/A converters having low converting speeds and hence to simplify the construction of the control signal setting circuit 20.

It is also possible to use the control signal setting circuit 20 instead of the control signal calculator 19 in the second embodiment (Fig. 3).

**Claims**

1. Color imaging apparatus comprising:

means (1, 3, 5, 6, 16) for generating a luminance signal and a plurality of color difference signals and for performing white-balance compensation by controlling levels of said color difference signals;

means (13) for providing a plurality of carrier chrominance signals by modulating a plurality of color sub-carriers having different phases from one another with said color difference signals; and

means (17) for producing a composite color video signal from said luminance signal and said carrier chrominance signals;

characterised by means (14) for providing a color temperature signal representing a color temperature of illuminating light; and

means (7, 8, 11, 12) responsive to said color temperature signal for compensating a color reproduction characteristic of said composite color video signal after said white-balance compensation.

2. Color imaging apparatus according to claim 1, characterised in that the compensating means includes means (7, 8) for gain-controlling white-balanced color difference signals delivered from said white-balance compensation performing means (5) in response to said color temperature signal.

3. Color imaging apparatus according to claim 1 or 2, characterised in that the compensating means includes means (11, 12) for phase-controlling said color sub-carriers in response to said color temperature signal.

4. Color imaging apparatus according to claim 2 or 3, characterised in that the compensating means (20) includes an analog-to-digital converter for converting said color temperature signal to a digital color temperature signal, a read-only-memory in which said digital color temperature signal is applied as address data and digital control signals are outputted, and digital-to-analog converter for converting said digital control signals into control signals for controlling the gain-controlling means (7, 8) and/or the phase-controlling means (11, 12).

5. Color imaging apparatus according to any preceding claim, characterised in that the means (5) for performing white-balance compensation includes the means for providing a color temperature signal.

**Patentansprüche**

1. Farbabbildungsvorrichtung mit:

Einrichtungen (1, 3, 5, 6, 16) zum Erzeugen eines Luminanzsignals und mehrerer Farbdifferenzsignale und zum Ausführen einer Weißausgleich-Kompensation durch Steuern von Pegeln der Farbdifferenzsignale,

einer Einrichtung (13) zum Bereitstellen mehrerer Trägerchrominanzsignale durch Modulieren mehrerer Farbhilfsträger mit verschiedenen phasen zueinander mit den Farbdifferenzsignalen, und

einer Einrichtung (17) zum Erzeugen eines zusammengesetzten Farbfernseh-Bildsignals aus dem Luminanzsignal und den Trägerchrominanzsignalen,

gekennzeichnet durch eine Einrichtung (14) zum Bereitstellen eines Farbtemperatursignals, das eine Farbtemperatur von strahlendem Licht darstellt, und eine Einrichtung (7, 8, 11, 12), die anspricht auf das Farbtemperatursignal, zum Kompensieren einer Farbwiedergewinnungscharakteristik des zusammengesetzten Farbfernseh-Bildsignals nach der Weißausgleich-Kompensation.

2. Farbabbildungsvorrichtung nach Anspruch 1, dadurch gekennzeichnet, daß die Kompensationseinrichtung eine Einrichtung (7, 8) aufweist zur Verstärkungsregelung von Weißausgleich-Farbdifferenzsignalen, die von der Weißausgleich-Kompensationsdurchführeinrichtung (5) abhängig von dem Farbtemperatursignal geliefert werden.

3. Farbabbildungsvorrichtung nach Anspruch 1 oder 2, dadurch gekennzeichnet, daß die Kompensationseinrichtung eine Einrichtung (11, 12) aufweist zur Phasenregelung der Farbhilfsträger abhängig von dem Farbtemperatursignal.

4. Farbabbildungsvorrichtung nach Anspruch 2 oder 3, dadurch gekennzeichnet, daß die Kompensationseinrichtung (20) aufweist einen Analog/Digital-Wandler zum Wandeln des Farbtemperatursignals in ein Digital-Farbtemperatursignal, einen Lese-Speicher (ROM), in dem das Digital-Farbtemperatursignal als Addressdaten zugeführt wird und von dem Digital-Steuersignale ausgegeben werden, und Digital/Analog-Wandler zum Wandeln der Digital-Steuersignale in Steuersignale zum Steuern der Verstärkungssteuerungseinrichtung (7, 8) und/oder der Phasen-Steuerungseinrichtung (11, 12).

5. Farbabbildungsvorrichtung nach einem der vorstehenden Ansprüche, dadurch gekennzeichnet, daß die Einrichtung (5) zum Durchführen der Weißausgleich-Kompensation die Einrichtung zum Bereitstellen eines Farbtemperatursignals aufweist.

**Revendications**

1. Appareil de prise de vue en couleur, comprenant.

- un moyen (1, 3, 5, 6, 16) pour produire un signal de luminance et une multitude de signaux de différence de couleur et pour exécuter la compensation de l'équilibrage des blancs en commandant les niveaux des signaux de différence de couleur;

- un moyen (13) pour fournir une multitude de signaux de chrominance de porteuse en modulant une multitude de sous-porteuses de couleur ayant des phases différentes les unes des autres avec les signaux de différence de couleur, et

- un moyen (17) pour produire un signal vidéo de couleur composite à partir du signal de luminance et des signaux de chrominance de porteuse;

caractérisé par un moyen (14) pour fournir un signal de température de couleur représentant une température de couleur de la lumière d'éclairage; et

un moyen (7, 8, 11, 12) répondant au signal de température de couleur pour compenser une caractéristique de reproduction des couleurs du signal vidéo composite de couleur après ladite compensation de l'équilibrage des blancs.

2. Appareil de prise de vue en couleur selon la revendication 1, caractérisé en ce que le moyen de compensation comprend un moyen (7, 8) pour commander en gain les signaux de différence de couleur équilibrés en blancs fournis par le moyen (5) d'exécution de la compensation de l'équilibrage des blancs en réponse au signal de température de couleur.

3. Appareil de prise de vue en couleur selon la revendication 1 ou 2, caractérisé en ce que le moyen de compensation comprend un moyen (11, 12) pour commander en phase les sous-porteuses de couleur en réponse au signal de température de couleur.

4. Appareil de prise de vue en couleur selon la revendication 2 ou 3, caractérisé en ce que le moyen de compensation (20) comporte un convertisseur analogique/numérique pour convertir le signal de température de couleur en signal numérique de température de couleur, une mémoire morte dans laquelle le signal numérique de température de couleur est appliqué comme donnée d'adresse et les signaux numériques de commande sont sortis, et un convertisseur numérique/analogique pour convertir les signaux numériques de commande en signaux de commande afin de commander le moyen de commande du gain (7, 8) et/ou le moyen de commande de phase (11, 12).

5. Appareil de prise de vue en couleur selon l'une quelconque des revendications précédentes, caractérisé en ce que le moyen (5) pour exécuter la compensation de l'équilibrage des blancs comporte le moyen fournissant un signal de température de couleur.

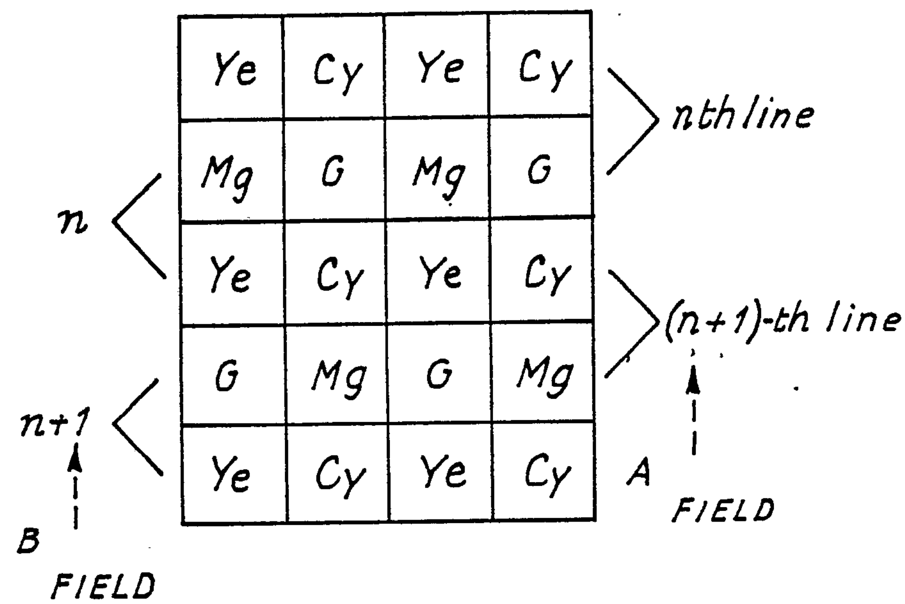
Ye
Cy
Ye
Cy
Mg
G
Mg
G
Ye
Cy
Ye
Cy
G
Mg
G
Mg
Ye
Cy
Ye
Cy
nth line
(n+1)-th line
n
n+1
A
FIELD
B
FIELD

FIG. 1

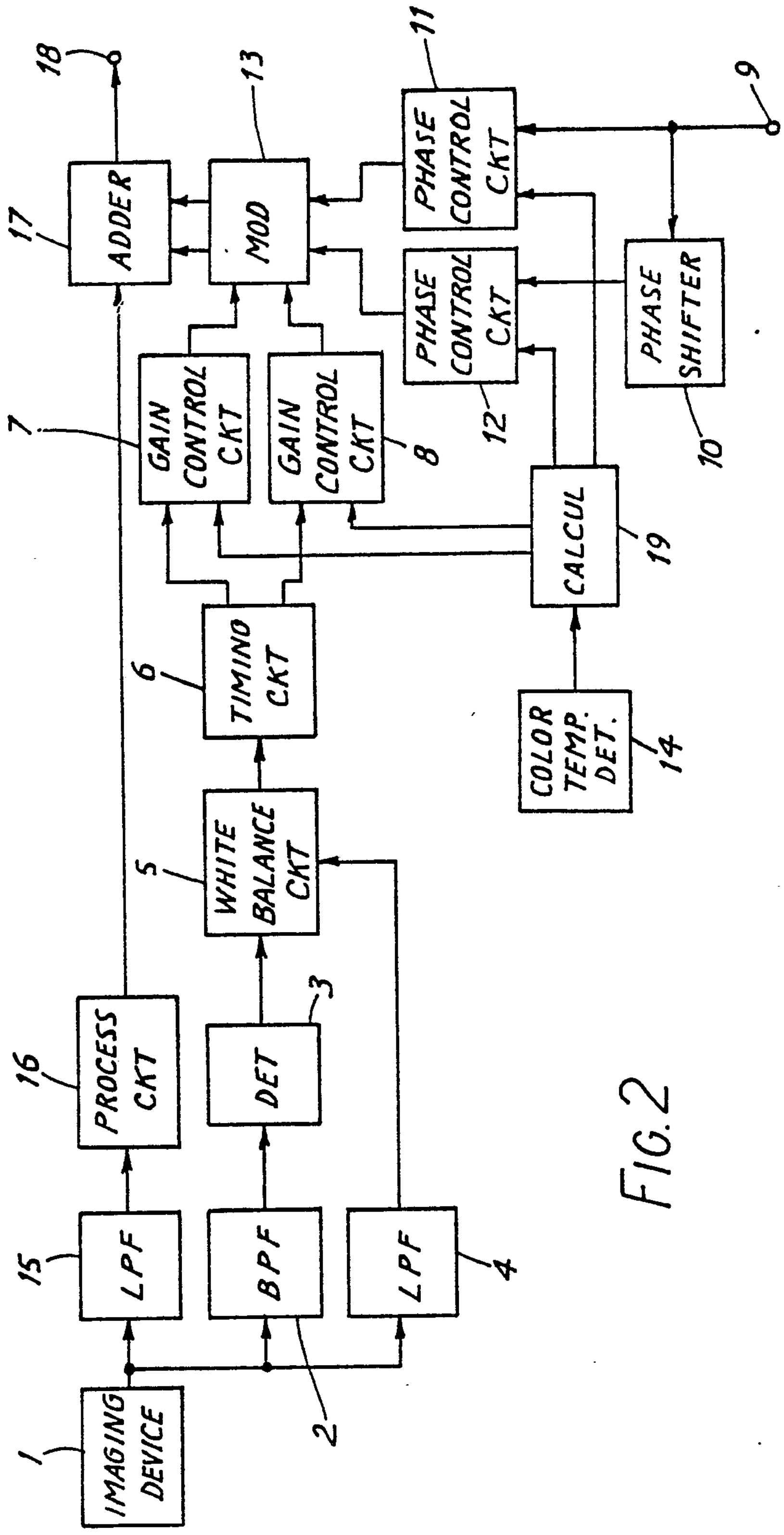
IMAGING DEVICE
LPF
BPF
LPF
PROCESS CKT
DET
WHITE BALANCE CKT
TIMING CKT
GAIN CONTROL CKT
GAIN CONTROL CKT
COLOR TEMP. DET.
CALCUL
PHASE CONTROL CKT
PHASE CONTROL CKT
PHASE SHIFTER
MOD
ADDER
1
2
3
4
5
6
7
8
9
10
11
12
13
14
15
16
17
18
19

FIG. 2

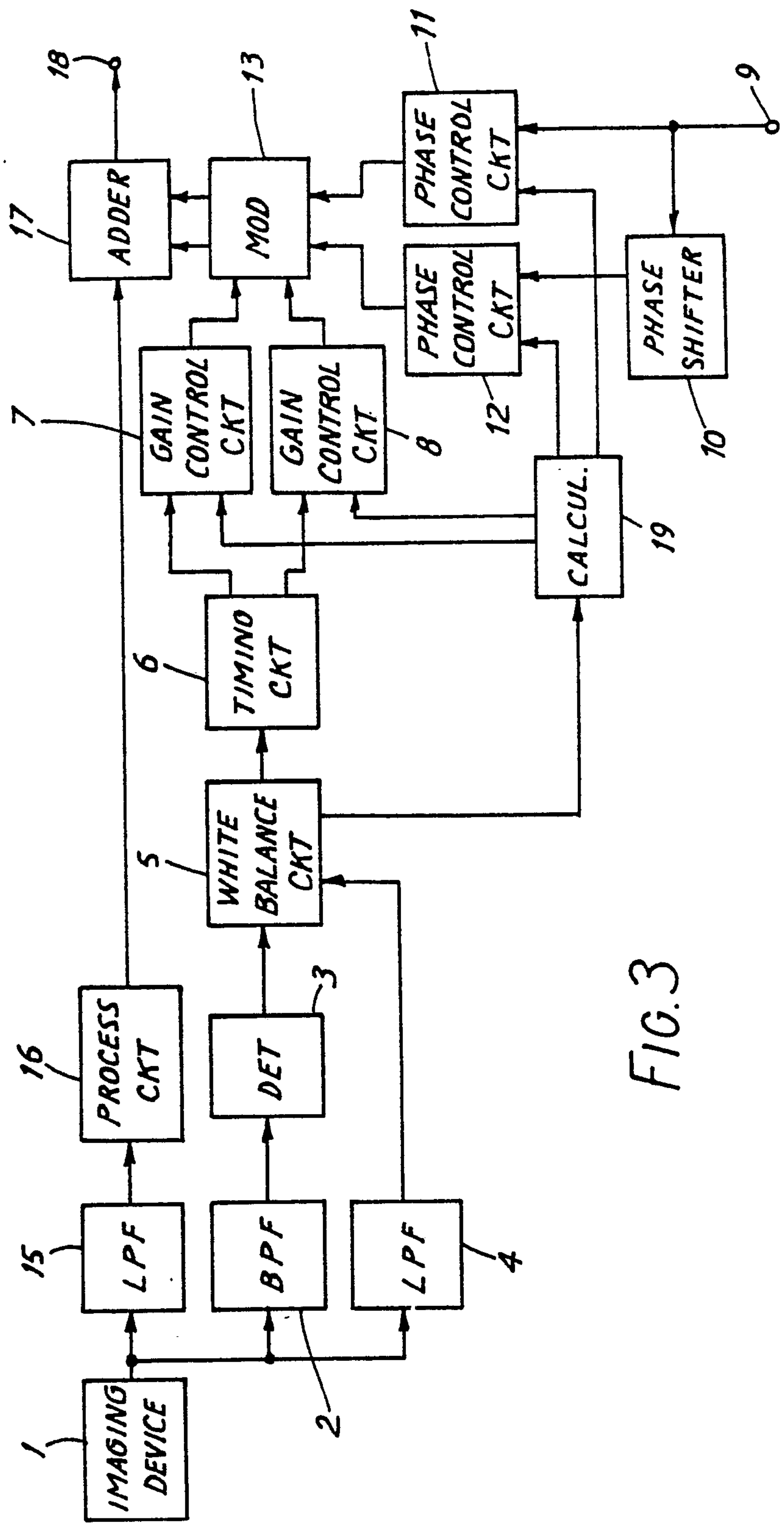
IMAGING DEVICE
LPF
BPF
LPF
PROCESS CKT
DET
WHITE BALANCE CKT
TIMING CKT
GAIN CONTROL CKT
GAIN CONTROL CKT
CALCUL.
PHASE CONTROL CKT
PHASE CONTROL CKT
PHASE SHIFTER
MOD
ADDER
1
2
3
4
5
6
7
8
9
10
11
12
13
15
16
17
18
19

FIG. 3

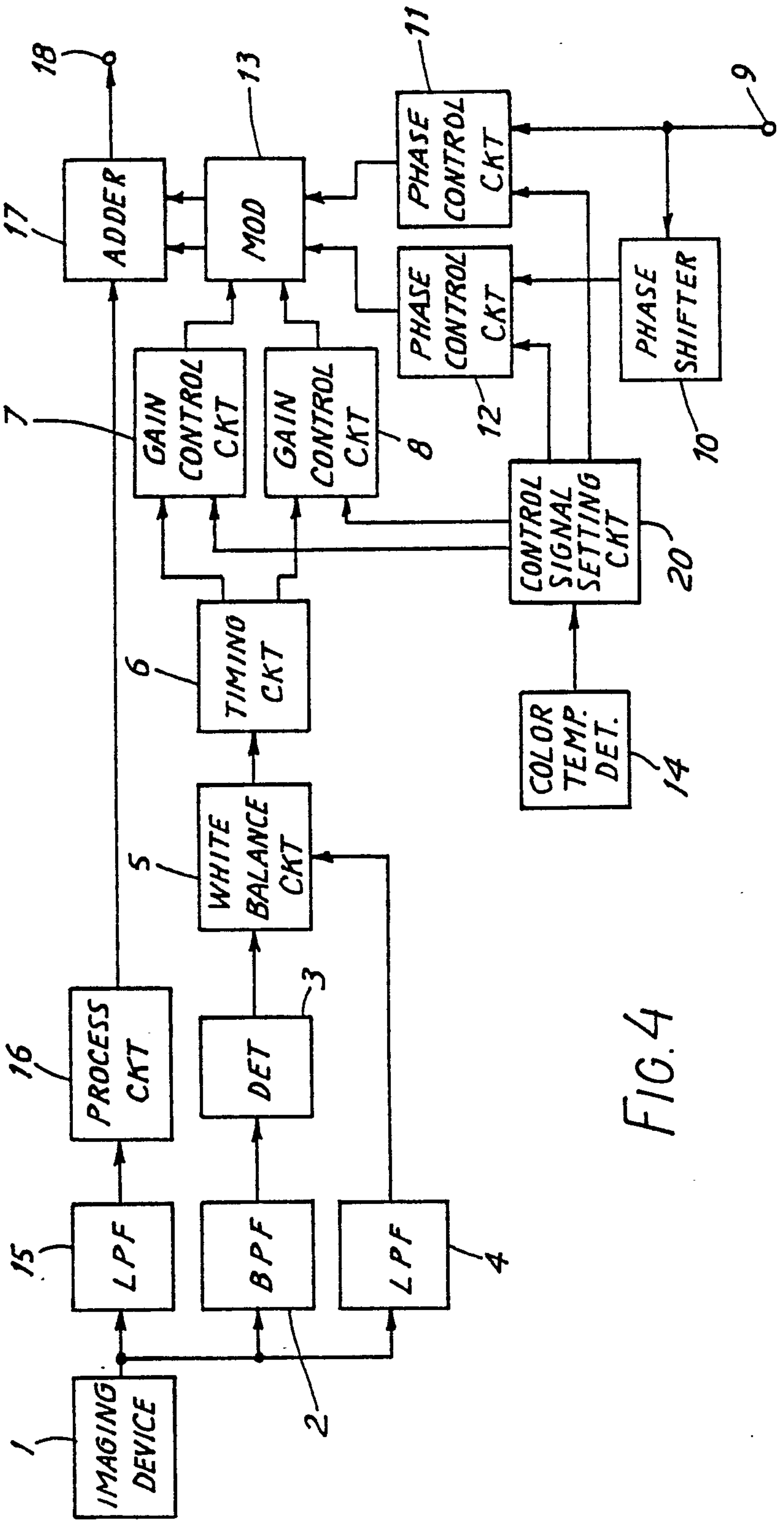
IMAGING DEVICE
1
LPF
15
BPF
2
LPF
4
PROCESS CKT
16
DET
3
WHITE BALANCE CKT
5
TIMING CKT
6
GAIN CONTROL CKT
7
GAIN CONTROL CKT
8
ADDER
17
MOD
13
18
PHASE CONTROL CKT
11
PHASE CONTROL CKT
12
PHASE SHIFTER
10
9
CONTROL SIGNAL SETTING CKT
20
COLOR TEMP. DET.
14

FIG. 4